# EUROPEAN PATENT APPLICATION

(11) **EP 1 806 906 A1**
(43) Date of publication of application: **11.07.2007**
(21) Application number: 07000135.9
(22) Date of filing: 04.01.2007
(51) Int. Cl.: H04L 29/08, H04L 29/06

(54) **Group management assistance appartus, group management apparatus, group management assistance method, and group management method**

(30) Priority: 06.01.2006 JP 2006001415
(71) Applicant: NEC Corporation, Minato-ku Tokyo (JP)
(72) Inventor: Ono, Yoshihiro, Minato-ku, Tokyo (JP); Kuroda, Masahiro, Minato-ku, Tokyo (JP)
(74) Representative: Glawe, Delfs, Moll

(57) **Abstract**

A group management assistance method includes a presence information receiving step (step S142) of receiving presence information of a client in which presence information changes, a change occurrence group detecting step (step S143) of determining whether a group to be generated by the presence information, a group in which constituent members are changed by the presence information, or a group in which constituent members are deleted by the presence information is present by comparing a policy of each group with the presence information, and a group information transmitting step (step S144) of transmitting group information related to the group to be generated, the group in which the constituent members are changed, or the group in which the constituent members are deleted.

## Description

### BACKGROUND OF THE INVENTION

### 1. Field of the Invention

The present invention relates to a group management assistance apparatus, a group management apparatus, a group management assistance method, and a group management method which manage members of a session group.

### 2. Description of the Related Art

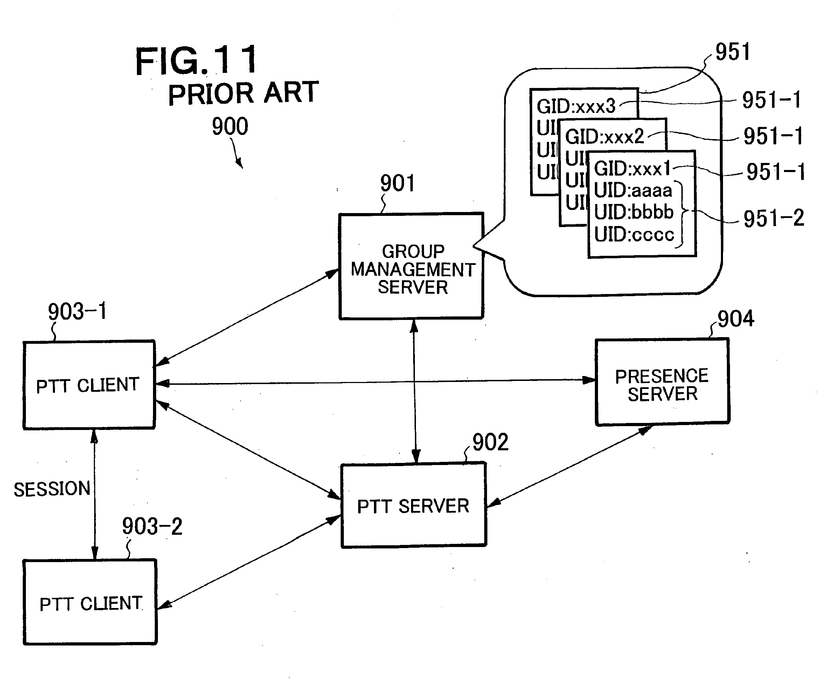

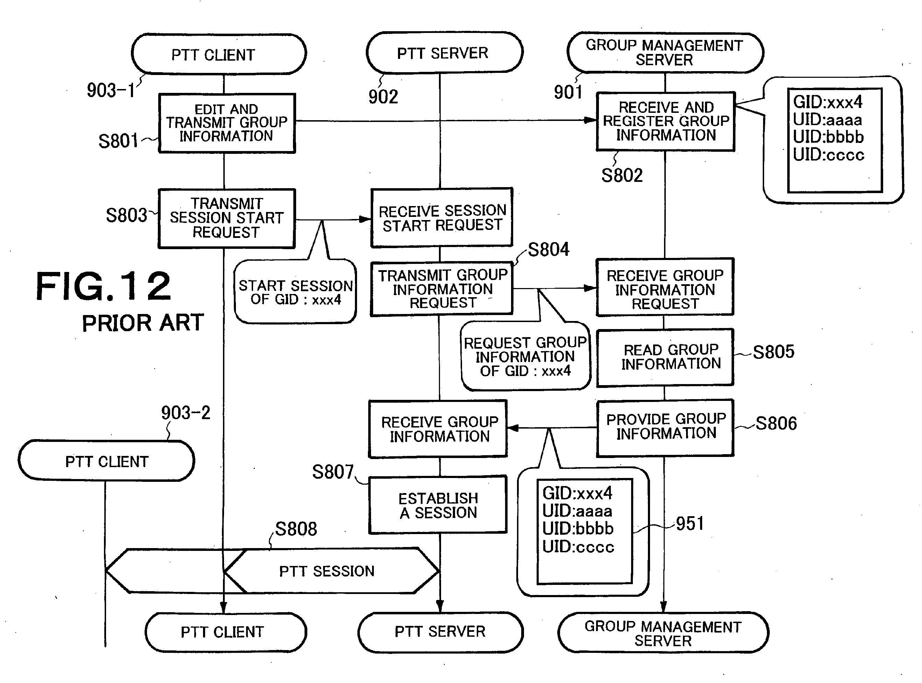

A group management method according to a first conventional art will be described below with reference to FIGS. 11 and 12.

FIG. 11 shows a configuration of a Push-To-Talk (to be referred to as PTT hereinafter) system 900.

In FIG. 11, a group management server 901 stores and manages group information 951 and provides the group information 951 when the group information 951 is requested from a PTT server 902. In FIG. 11, the group information 951 includes a group ID (GID) 951-1 and a group member ID (UID) 951-2 included in the group.

The PTT clients 903 communicate with the group management server 901 to perform addition, deletion, edition, and the like to the group information 951. In order to perform session with another group information 951, the PTT clients 903 communicates with the PTT server 902.

The PTT server 902 performs the start, management, and end of a session in which a plurality of PTT clients 903 participate. The management of the session also includes exchanges of various media exchanged between PTT clients 903-1 and 903-2.

In the PTT system 900, a presence server 904 shown in FIG. 11 is used. However, since a conventional group management method does not contribute to the presence server 904, an explanation about the presence server 904 is omitted.

FIG. 12 is a timing chart showing an operation of a PTT system.

The PTT clients 903 edit the group information 951 to transmit the edited group information 951 to the group management server 901 (step S801). In this case, it is assumed that new group information 951 is registered as GID : xxx4.

The group management server 901 receives and registers group information from the PTT clients 903 (step S802).

Thereafter, when a session start request is issued by a group member of GID : xxx4 from the PTT clients 903 to the PTT server 902 (step S803), the PTT server 902 inquires about group information for the group management server 901 by using the group ID 951-1 as a key to acquire the group member ID 951-2 of GID : xxx4 (step S804).

The group management server 901 which receives the inquiry reads the group information by using a GID as a key (step S805), and the group management server 901 provides the group information 951 about GID: xxx4 (step S806).

The PTT server 902 refers to the received group information to execute a session establishing process with clients participating in a session (step S807), and the PTT server 902 establishes a PTT session (step S808).

More specifically, when a session establishing request is issued from a certain PTT client, the PTT server 902 acquires a UID of a PTT client belonging to a group such that the PTT client inquires about the UID for the group management server 901 by using a GID belonging the PTT client as a key. The PTT server 902 establishes a PTT session with the PTT clients 903 having the acquired UID.

As a second conventional art, a group management method in an ID telephone exchanger disclosed in JP-A-2002-359690 will be described below.

This conventional art designates an IP telephone terminal participating in an IP telephone session on the basis of a participating terminal table held by the IP telephone exchanger.

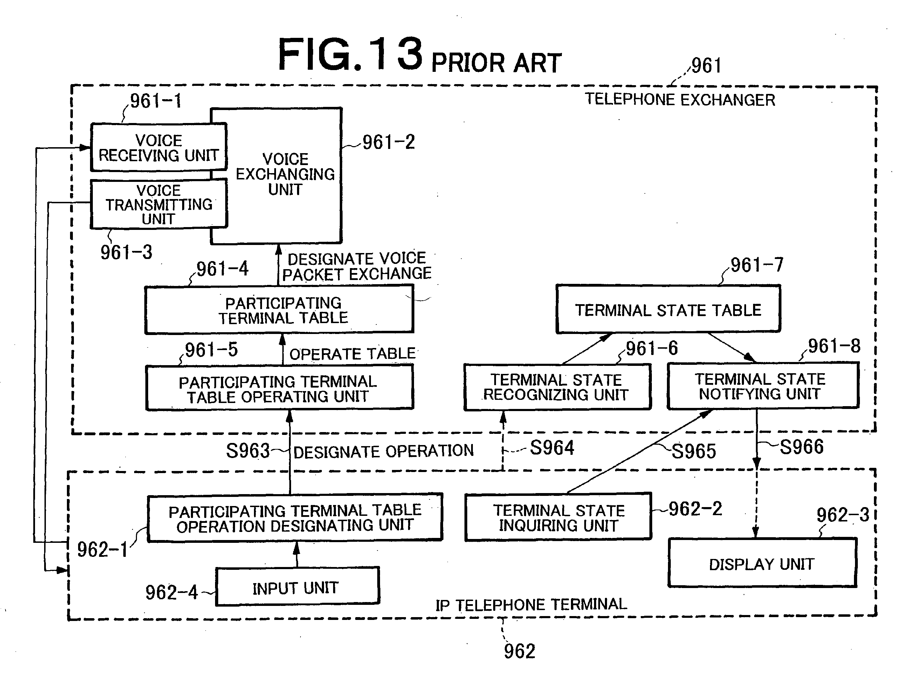

FIG. 13 is a block diagram of a group management process portion extracted from the invention described in JP-A-2002-359690.

A telephone exchanger 961 has a voice receiving unit 961-1 which receives voice from a participating terminal, a voice exchanging unit 961-2 which transfers (exchanges) the received voice to the participating terminal, and a voice transmitting unit 961-3 which transmits the exchanged voice to another terminal.

The voice exchanging unit 961-2 transmits a received voice received from a certain terminal to another participating terminal described in a participating terminal table 961-4 to realize group speech.

The participating terminal table 961-4 is operated by a table operating process of a participating terminal table operating unit 961-5 which receives a designation (S963) from a participating terminal table operation designating unit 962-1 of an IP telephone terminal 962. More specifically, addition and deletion of a terminal to/from the participating terminal table 961-4. The participating terminal table operation designating unit 962-1 addition and deletion of a terminal to/from the participating terminal table 961-4 by an operation designated by the input unit 962-4.

On the other hand, the telephone exchanger 961 causes a terminal state recognizing unit 961-6 to monitor a state of the terminal (step S964), and the obtained information is held in a terminal state table 961-7.

The information of the terminal state table 961-7 is provided from a terminal state notifying unit 961-8 to a terminal depending on an inquiry request (step S965) from a terminal state inquiring unit 962-2 of the IP telephone terminal 962 (S966).

When a user of the IP telephone terminal 962 will start an IP telephone session, the user visually checks a plurality of terminal states except for user's own terminal displayed on a display unit 962-3 and operates an input unit 962-4 such that another IP telephone terminal 962 in IP telephone terminals which are members which can participate in the session (members displayed on the display unit 962-3) is registered in the participating terminal table 961-4.

In this manner, the session between the IP telephone terminal 962 which issues a designation (step S963) for registration and the IP telephone terminal 962 designated by the designation is started.

However, in the group management method according to the first conventional art, the following problems are posed.

It is a first problem that the method cannot cope with a dynamic change of a group because group members in group information are quasi-fixedly registered in advance.

It is a second problem that a session participating member cannot be changed during a session because session establishment is executed by referring to group information only once when the session is established.

It is a third problem that, when a session will be performed by members constituting clients for, i.e., a specific presence, a session cannot be easily established by desired members because a user operates a terminal to search for the members and must designate member IDs of the members.

In the group management method according to the second conventional art, the following problems are posed.

A first problem is as follows. That is, a user of a certain participating IP terminal 962 sees the IP telephone terminal 962 displayed on the display unit 962-3 which reflects a state of the terminal state table 961-7 to determine another IP telephone terminal 962 to be registered in the participating terminal table 961-4, so that the corresponding IP telephone terminal 962 is registered in the participating terminal table 961-4. Therefore, since a group constituting process is performed through determination and operation by a human being, the group constituting process is not automated, and the method cannot cope with a dynamic change of a group. More specifically, an automatic process to establish a session cannot be performed.

A second problem is as follows. That is, since a user herself/himself to participate in a session monitors a state of the display unit 962-3 and then operates the IP telephone terminal 962 owned by the user, the user herself/himself must perform determination and operation to change session participating members during a session. More specifically, an automatic changing process cannot be performed during the session.

A third problem is as follows. That is, when a session is to be performed by members constituted by only clients in which a value of a specific presence of a plurality of presences (presence states (for example, "position", "presence", "sitting", "in conference", "absence", and the like)) is a predetermined value (for example, ""position" is "company" or the like), a user operates a terminal to search for a member being in such a presence state and must designate IDs of the respective members ("member IDs"). For this reason, a session by members in an arbitrary presence state cannot be easily established.

### SUMMARY OF THE INVENTION

It is an object of the present invention to provide a group management assistance apparatus, a group management apparatus, a group management assistance method, and a group management method which make it possible to dynamically change group members.

According a first aspect of the present invention, there is provided a group management assistance apparatus comprising: a presence information receiving unit which receives presence information of a client in which presence information changes; a change occurrence group detecting unit which determines whether a group to be generated, a group in which constituent members are changed, or a group to be deleted is present by comparing a policy of each group with the presence information; and a group information transmitting unit which transmits group information related to the group to be generated, the group in which the constituent members are changed, or the group to be deleted.

In the group management assistance apparatus, the policy may include information is in an apparatus except for the group management assistance apparatus or information input from an apparatus except for the group management assistance apparatus.

Therefore, the group information can be changed automatically with the presence information of a client in which presence information changes. Thus, it can be changed dynamically a client who participate in a session.

According to a second aspect of the present invention, there is provided a group management server comprising: a group information receiving unit which receives group information from a group management assistance apparatus; a session change detecting unit which determines whether a group which has been established a session and in which participating members must be changed by the group information is present; and a session participating member changing unit which, if a group which has been established a session and in which participating members must be changed by the group information is present, then changes members participating the group using the group information.

Therefore, the session participating member can be changed dynamically depending on the received group information.

### BRIEF DESCRIPTION OF THE DRAWINGS

FIG. 1 is a block diagram showing a configuration of a system according to Embodiment 1 of the present invention;
FIG. 2 is a sequence diagram showing main operations of the system shown in FIG. 1;
FIG. 3 is a block diagram showing a configuration of a system according to Embodiment 2 of the present invention;
FIG. 4 is a sequence diagram showing main operations performed by Embodiment 2 of the present invention of the system shown in FIG. 3;
FIG. 5 is a diagram showing an example of a group policy held by the group management assistance apparatus shown in FIG. 1 or 3;
FIG. 6 is a diagram showing an example of presence information;
FIG. 7 is a sequence diagram showing main operations performed by Embodiment 3 of the present invention of the system shown in FIG. 3;
FIG. 8 is a block diagram showing a configuration of a system according to Embodiment 4 of the present invention;
FIG. 9 is a diagram showing an example of a group policy held by the group management assistance apparatus shown in FIG. 8;
FIG. 10 is a sequence diagram showing main operations of a system shown in FIG. 8;
FIG. 11 is a block diagram showing a configuration of a system according to a conventional art 1;
FIG. 12 is a sequence diagram showing main operations of the system shown in FIG. 11; and
FIG. 13 is a block diagram showing a configuration of a system of a conventional art 2.

### DESCRIPTION OF THE PREFERRED EMBODIMENTS

Best modes to carry out the present invention will be described below in detail with reference to the accompanying drawings.

### [Embodiment 1]

The present invention is characterized in that, in an electron conference system and a Push-To-Talk (PTT) system, a member constituting a group and a member participating a session (conversation or conference) is instantaneously an optimum constituent member.

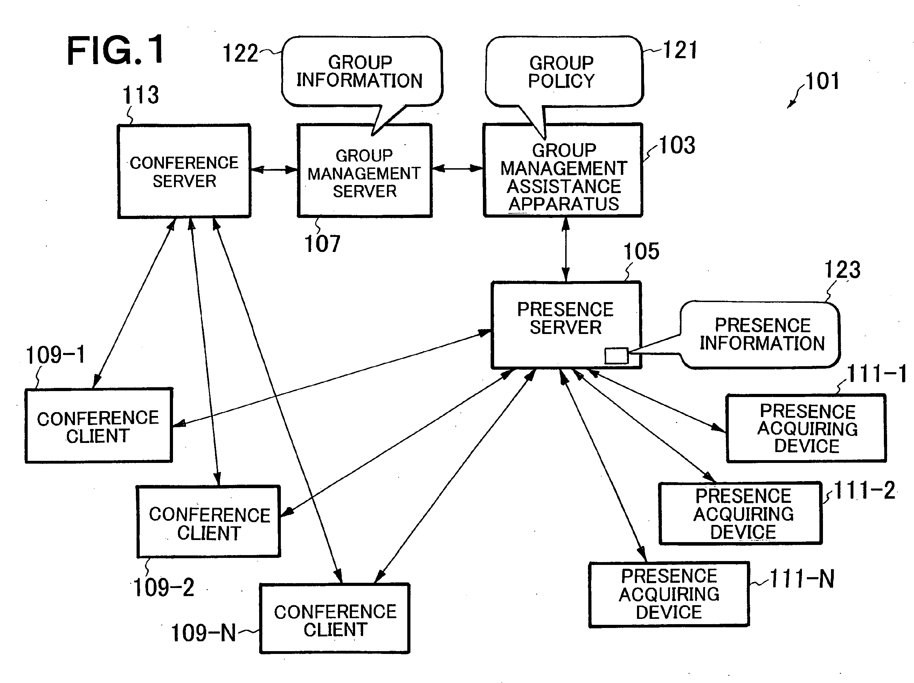

FIG. 1 is a constitution of an electronic conference system using a group management method according to the present invention.

In FIG. 1, a group management assistance apparatus 103 refers to presence information 123 held by a presence server 105 and generates or re-constitutes group information 122 on the basis of a group policy 121 held in the group management assistance apparatus 103. The group management assistance apparatus 103 registers the result in a group management server 107.

The group management server 107 manages group information related to a plurality of conference clients 109-1, 109-2, and 109-N, receives the group information 122 provided from the group management assistance apparatus 103, and provides the group information 122 to a conference server 113.

The presence server 105 receives the presence information 123 from presence acquiring devices 111-1, 111-2, and 111-N and the conference clients 109-1, 109-2, and 109-N and manages the presence information 123. The presence server 105 provides the presence information 123 to the conference clients 109-1, 109-2, and 109-N and the group management assistance apparatus 103.

The conference server 113 acquires the group information 122 from the group management server 107 and manages (establishes, maintains, and dissolves) a conference session to which the plurality of conference clients 109-1, 109-2, and 109-N serving as group members participate.

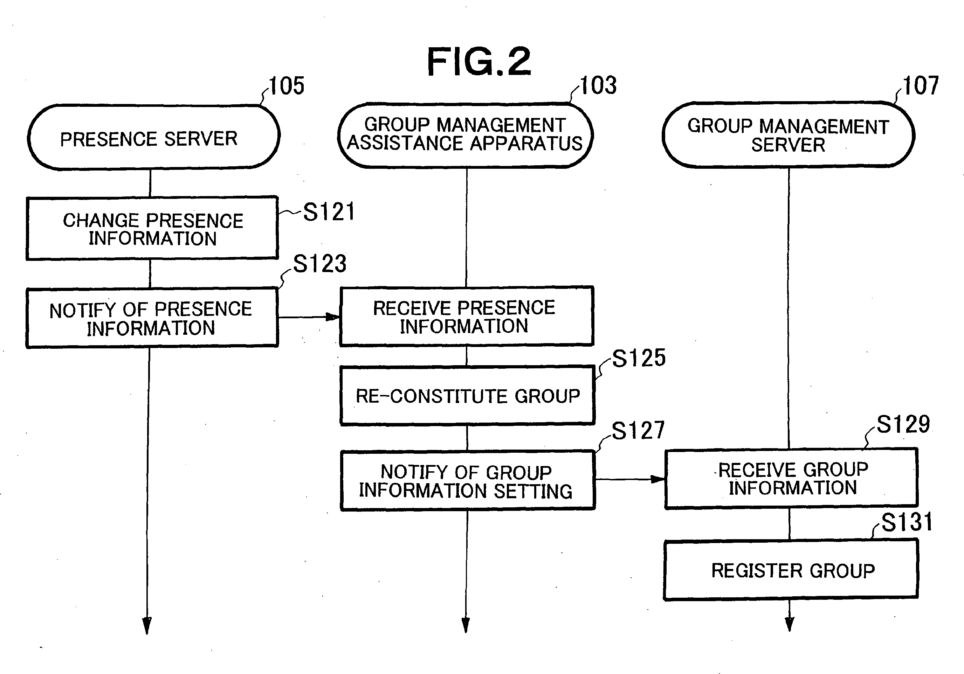

FIG. 2 shows a sequence for explaining an operation of a conference system using the group management method according to the present invention.

In FIG. 2, when the presence information 123 held by the presence server 105 changes (step S121), then the presence server 105 notifies the group management assistance apparatus 103 of the changed presence information 123 (step S123).

When a group configuration changes due to the notified presence information 123, the group management assistance apparatus 103 re-constitutes the group (step S125), and the group information 122 expressing the re-constituted group is set and give to the group management server 107 (step S127).

When the group management server 107 receives the group information 122 (step S129), the group management server 107 immediately registers the group information 122 (step S131).

In this manner, in this embodiment, the group information 122 is designed to be re-constituted immediately after the presence information 123 changes.

Groups which reflect states of the conference clients 109 which change with time can be constituted.

### [Embodiment 2]

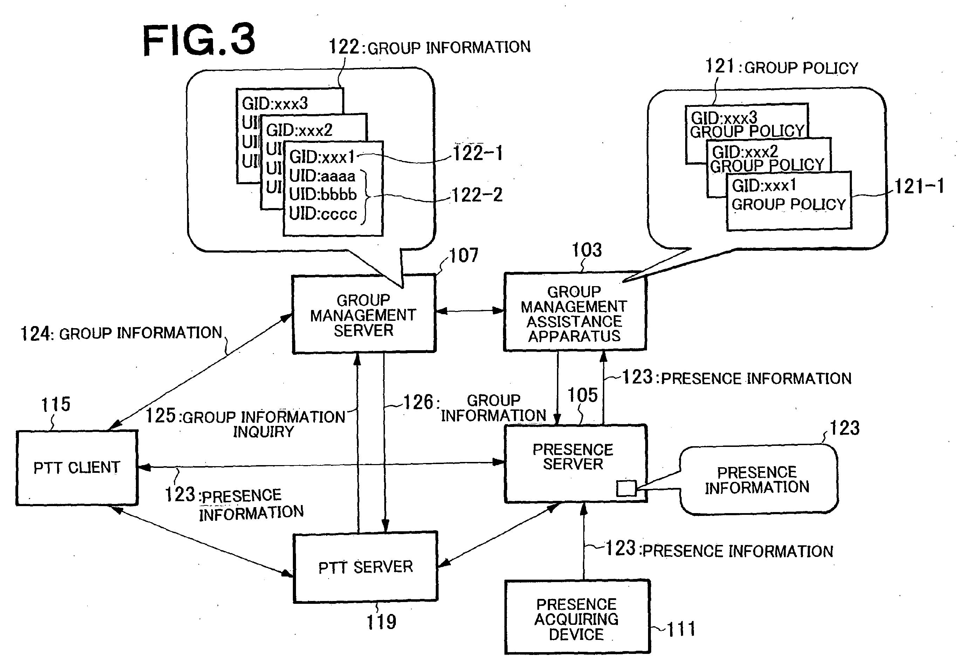

Referring to FIG. 3, a PTT system according an embodiment using the group management method of the present invention.

In FIG. 3, the group management assistance apparatus 103 holds the group policy 121, constitutes a group according to the group policy 121 on the basis of the presence information 123, and notifies the group management server 107 of the group information 122 representing the group.

In this case, the group policy 121 is constituted by information (GID) 121-1 specifying at least a group and condition information constituting the group.

The group information 122 is constituted by information (GID) 122-1 constituting at least a group and constituent member information 122-2 of the group.

The group management server 107 holds the group information 122, receives group information 124 from the group management assistance apparatus 103 and a PTT client 115, and returns group information 126 responding to a group information inquiry 125 from a PTT server 119.

The presence server 105 receives the presence information 123 from the PTT client 115 or a various presence information acquiring device 111, manages these pieces of presence information 123, and provides the pieces of presence information 123 to the PTT client 115 and the group management assistance apparatus 103.

The PTT server 119 manages a voice conference session in which the plurality of PTT clients 115 participate.

The PTT client 115 performs a voice conference session with other plurality of PTT clients through the PTT server 119.

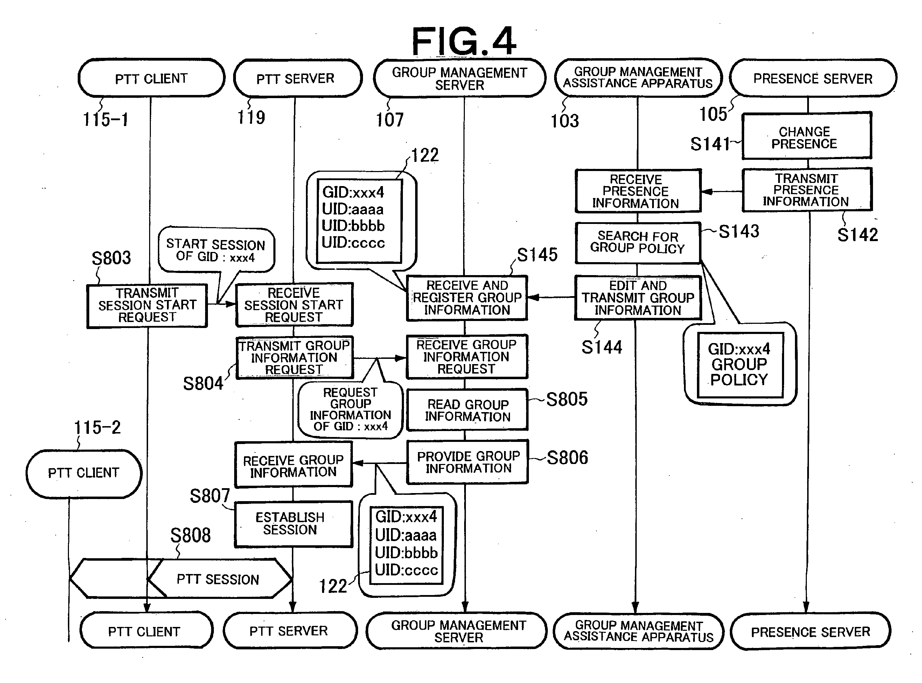

An operation of the PTT system shown in FIG. 3 and using the group management method according to the present invention will be described by using a time chart shown in FIG. 4.

In FIG. 4, when the presence information 123 managed by the presence server 105 changes (step S141), the presence server 105 transmits the presence information 123 to the group management assistance apparatus 103 (step S142).

The group management assistance apparatus 103, on the basis of the received presence information, searches a group using the presence information as a policy of a group configuration (step S143). When the corresponding group policy is present, group information is edited according to the group policy and transmitted to the group management server 107 (step S144).

When the group management server 107 receives new group information from the group management assistance apparatus 103, the group management server 107 registers the new group information as group information and subsequently manages the group information.

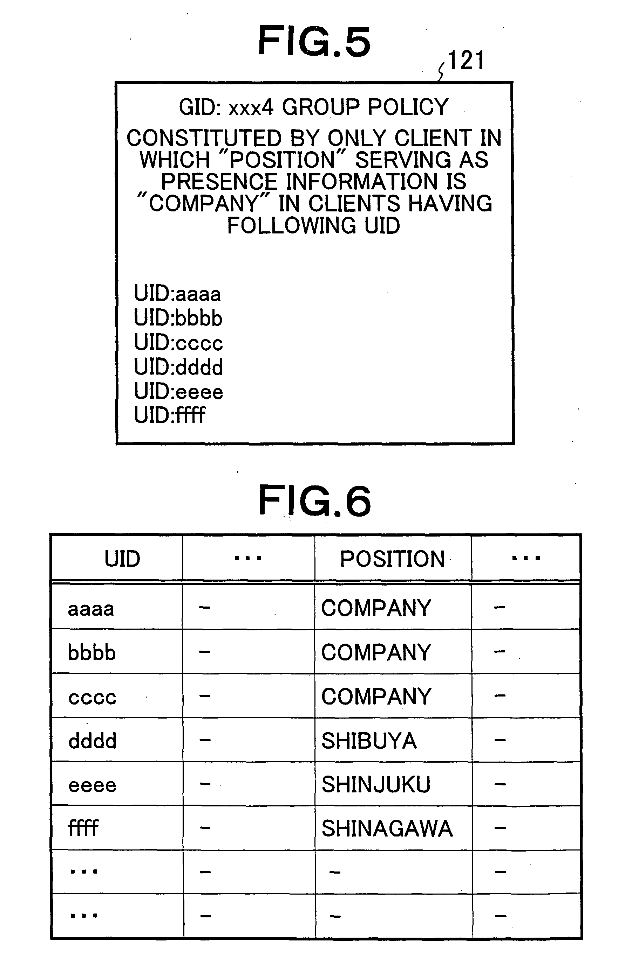

An example of a group policy is shown in FIG. 5. In this case, it is designated that
"A group indicated by Group ID : GID : xxx4 is
a group constituted by clients in which "positions" which are one types of pieces of presence information in clients including six clients:
UID : aaaa
UID : bbbb
UID : cccc
UID : dddd
UID : eeee
UID : ffff
are "companies"".

For example, in step S142, when the presence information is transmitted from the presence server 105 to the group management assistance apparatus 103, a "position" which is one type of presence information is shown in FIG. 6 as a result of the transmission. In this case, the group of GID : xxx4 is a group constituted by three clients:
UID : aaaa
UID:bbbb
UID: cccc
in which "positions" are "companies" in six clients shown in FIG. 5. In such a case, in step S144,
GID : xxx4
UID : aaaa
UID : bbbb
UID : cccc
are transmitted.

When pieces of position information before transmission of the presence information in step S142 are
UID : aaaa : Shibuya
UID : bbbb : Harajuku
UID : cccc : Ebisu
UID : dddd : Shibuya
UID : eeee : Shinjuku
UID : ffff : Shinagawa,
a group is generated.

When pieces of position information before transmission of the presence information in step S142 are
UID : aaaa : company
UID : bbbb : company
UID : cccc : Ebisu
UID : dddd : Shibuya
UID : eeee : Shinjuku
UID : ffff : Shinagawa,
group members increase in number.

Furthermore, when pieces of position information before transmission of the presence information in step S142 are
UID : aaaa : company
UID : bbbb : company
UID : cccc : company
UID : dddd : company
UID : eeee : Shinjuku
UID : ffff : Shinagawa,
group members decrease in number.

When pieces of position information serving as results of the presence information transmitted in step S142 at one point of time are
UID : aaaa : company
UID : bbbb : Tamachi
UID : cccc : Shinbashi
UID : dddd : company
UID : eeee : Shinjuku
UID : ffff : Shinagawa,
and when pieces of position information serving as results of presence information transmitted in step S142 at the next point of time are
UID : aaaa : Yurakucho
UID : bbbb : Tamachi
UID : cccc : Shinbashi
UID : dddd : company
UID : eeee : Shinjuku
UID : ffff : Shinagawa,
the group is deleted. In such a case, in step S144, only
GID:xxx4,
UID : NULL,
or
GID : xxx4
is transmitted.

For example, when the presence information is transmitted from the presence server 105 to the group management assistance apparatus 103, "positions" serving as one types of the presence information are consequently shown in FIG. 6. In this case, the group of GID : xxx4 is a group constituted by three clients:
UID : aaaa
UID : bbbb
UID : cccc
in which "positions" are "companies" in the sixth clients shown in FIG. 5. In such a case, in step S144,
GID : xxx4
UID : aaaa
UID : bbbb
UID : cccc
are transmitted.

In this manner, at any time, the group management assistance apparatus 103 updates the group information the moment the presence information is notified by the presence server 105.

When a user starts a session by the PTT client 115, the user requests the session start by a desired group ID. Processes including the request process performed until a PTT session is established are the same as those in a PTT system of the conventional art 1 (see FIG. 12). The same reference symbols (S803 to S808) as in FIG. 12 denote the same processes in FIG. 4.

### [Embodiment 3]

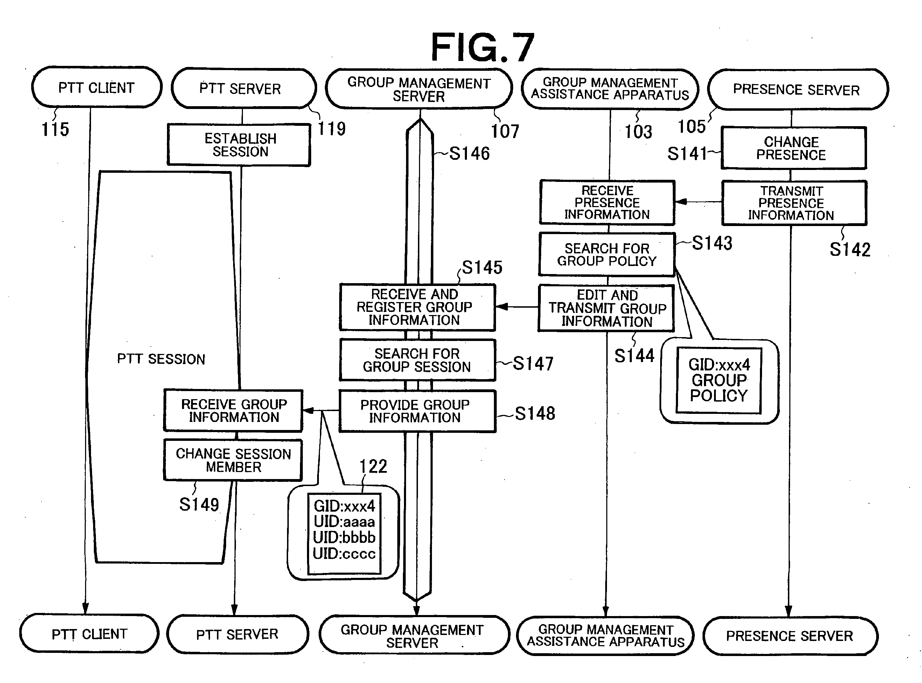

A basic configuration of Embodiment 3 of the present invention is the same as that in Embodiment 2. However, the point which makes it possible to change the members in the PTT session is devised. Fig. 7 shows the timing chart showing the operation.

In FIG. 7, the group management server 107 recognizes whether at least one piece of group information 122 sequentially managed by the group management server 107 includes group information the PTT group session of which is established (step S146).

When the group management server 107 receives the group information from the group management assistance apparatus 103 (step S145), the group management server 107 determines whether the group the session of which is established at the present includes a group having the same GID as that of the group information (step S147). When the group includes such a group (for example, the group of GID : xxx4), the group management server 107 provides the group information 122 received in step S145 to the PTT server 119 (step S148).

When the PTT server 119 receives the group information in step S148, in a group in a session, the PTT server 119 updates group information of a group related to the group information on the basis of the group information. In this manner, a session member of the group is changed (step S149).

For example, in GID : xxx4 having the group policy shown in FIG. 5, it is assumed that a presence shown in FIG. 6 at past time and that a session is started in this state. Thereafter, at one point of time, if "position" of UID : aaaa changes into a position except for company, although it is in the process of the session, session members are changed such that participating members in the session are only UID : bbbb and cccc.

In this manner, according to this embodiment, a group is also changed during a session. For this reason, when secret information which can be spoken only in "company" is exchanged in conversation, the secret information can be advantageously prevented from leaking from a client moving from the company to out-of-company.

For example, when the embodiment is applied to a game to set presence information set in a group policy as scenario information such as "stage" or "phase", game contents having higher reality can be provided to a user.

### [Embodiment 4]

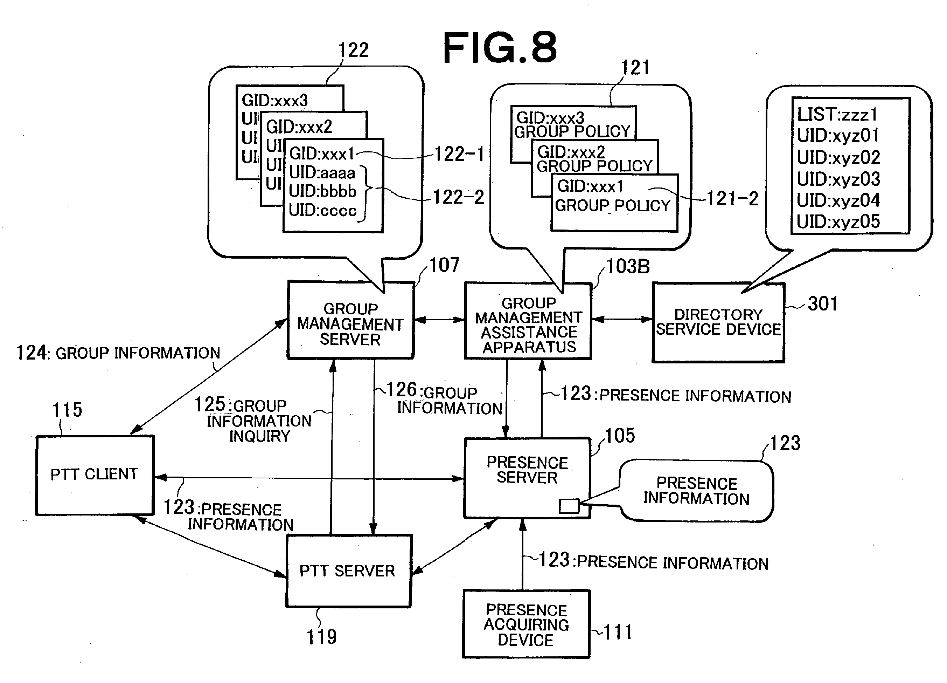

A basic configuration of Embodiment 4 of the present invention is the same as that in Embodiment 2. However, Embodiment 4 is different from Embodiments 2 and 3 in that a group policy includes information stored in an external device (for example, a directory as shown in FIG. 8).

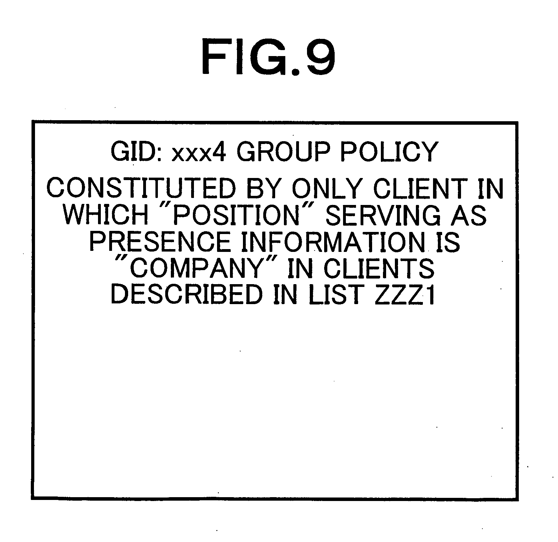

A configuration of Embodiment 4 is shown in FIG. 8. At least one group policy is stored in a group management assistance apparatus 103B shown in FIG. 8. A group policy as an example is shown in FIG. 9. As shown in FIG. 9, the group policy refers to a list in a directory server on the directory service device 301 serving as an external device. More specifically, in a policy of a group discriminated from another group by GID : xxx4, it is defined that "a client in which "position" serving as one type of presence information is a group member of members which are present in LIST : zzz1 of the directory service device 301". As shown in FIG. 8, in the directory service device 301, it is described that a member of a list discriminated from another member by LIST : zzz1 is a client of UID : xyz01 to xyz05.

The group management assistance apparatus 103B checks all group policies managed by the group management assistance apparatus 103B when the group management assistance apparatus 103B receives presence information from the presence server 105. When the group policies include a group policy which refers to a list held by the directory service device 301, the group management assistance apparatus 103B acquires a member from the list (steps S151 and S152). When a member corresponding to a client related to the presence information received from the presence server 105 is included in members acquired from the directory service device 301, the presence information of the client is compared with the group policy. When the presence information of the client affects addition and deletion of a member of the group, group information in a state after the addition or deletion is transmitted to the group management server 107.

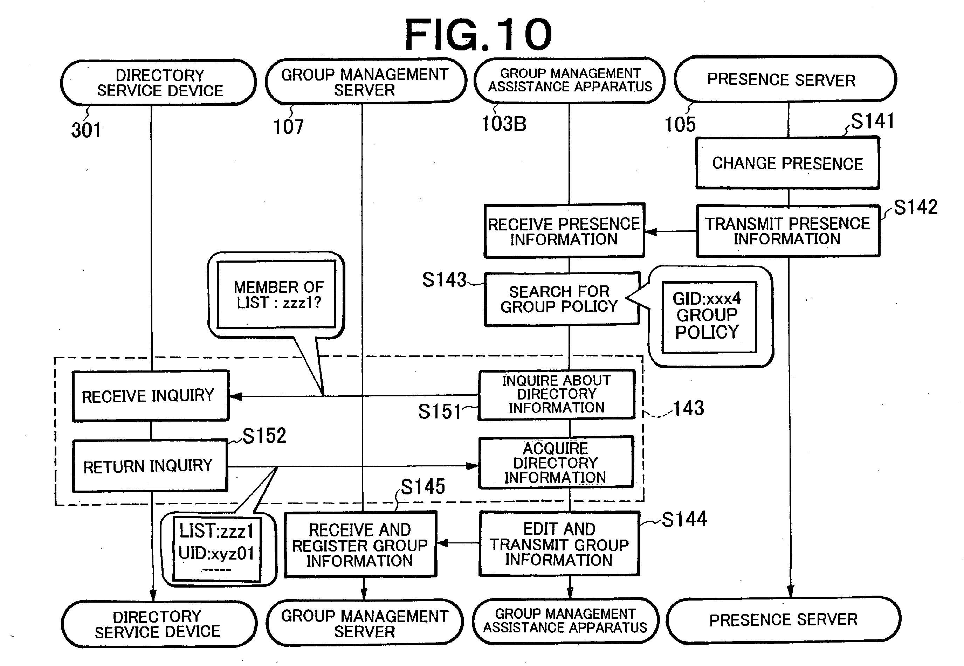

A timing chart showing an operation unique to Embodiment 4 of the system shown in FIG. 8 is shown in FIG. 10. FIG. 4 of Embodiment 2 is different from FIG. 10 of this embodiment in that group policy searching in step S143 performed after the presence information is received in step S142 in the operation shown in FIG. 4 until the group information is transmitted in step S144 includes directory information inquiry and directory information acquisition in steps S151 and S152.

In this manner, in this embodiment, the client information in the group policy is acquired with reference to the information stored in the external device. Therefore, for example, when a group constituted by members for organization in a company or an arbitrary business project is constituted, a management cost caused by registering (double registration) member information in both an in-company database and a group policy for a PTT system can be reduced. Furthermore, a communication means for a floating project in a company can be flexibly set.

For example, a customer database is stored in a directory service device, a service which provides information to a customer group depending on presences can be realized. More specifically, when a group policy is given by "a PTT client in which "come-to-shop" serving as one of pieces of presence information is "true" in PTT clients having predetermined IDs is a group member", a PTT client in which "come-to-shop" serving as one of pieces of presence information is actually "true" in PTT clients having predetermined IDs can be set as a group member. When a group policy is given by "a PTT client in which "purchased amount of certain merchandise" serving as one of pieces of presence information is "10000 yen or higher" in PTT clients having predetermined IDs is a group member", a PTT client in which "purchased amount of certain merchandise" serving as one of pieces of presence information is actually "10000 yen or higher" in PTT clients having predetermined IDs can be set as a group member. When a group policy is given by "a PTT client in which "a PTT client in which the number of times of visiting to a certain shop" serving as one of pieces of presence information is "one or more" in PTT clients having predetermined IDs is a group member", a PTT client in which the number of times of visiting to a certain shop" serving as one of pieces of presence information is actually "one or more" in PTT clients having predetermined IDs can be set as a group member.

Furthermore, for example, when an inhabitant database is used as a directory service, a service which provides disaster information, evacuation instruction information, or the like to an inhabitant group depending on presences can be realized.

In the timing chart in FIG. 10, it is set that the group management assistance apparatus performs information inquiry to the directory service. However, on the directory service side, corresponding information in the directory service may be written in a group policy managed by the group management assistance apparatus.

The group management assistance apparatus 103 and 103B shown in FIG. 1 or the like, the presence server 105 shown in FIG. 1 or the like, the group management server 107 shown in FIG. 1 or the like, and the conference server shown in FIG. 1 or the like can be realized by hardware, software, or a combination therebetween. The apparatus and the server are realized by a means including software, a program functioning as these apparatus and servers is loaded and executed by a computer.

In the embodiments described above, the group management method according to the present invention is applied to a PTT system. However, the group management method can be generally applied to a system such as an electronic conference system or an electronic mail system except for a PTT system which is constituted by groups and exchanges information between the groups.

## Claims

1. A group management assistance apparatus comprising:
a presence information receiving unit which receives presence information of a client in which presence information changes;
a change occurrence group detecting unit which determines whether a group to be generated, a group in which constituent members are changed, or a group to be deleted is present by comparing a policy of each group with the presence information; and
a group information transmitting unit which transmits group information related to the group to be generated, the group in which the constituent members are changed, or the group to be deleted.

2. The group management assistance apparatus according to claim 1, wherein
the policy includes information is in an apparatus except for the group management assistance apparatus or information input from an apparatus except for the group management assistance apparatus.

3. A group management server comprising:
a group information receiving unit which receives group information from a group management assistance apparatus;
a session change detecting unit which determines whether a group which has been established a session and in which participating members must be changed by the group information is present; and
a session participating member changing unit which, if a group which has been established a session and in which participating members must be changed by the group information is present, then changes members participating the group using the group information.

4. A group management assistance method comprising:
the presence information receiving step of receiving presence information of a client in which presence information changes;
the change occurrence group detecting step of determining whether a group to be generated, a group in which constituent members are changed, or a group to be deleted is present by comparing a policy of each group with the presence information; and
the group information transmitting step of transmitting group information related to the group to be generated, the group in which the constituent members are changed, or the group to be deleted.

5. The group management assistance method according to claim 4, wherein
the policy includes information is in an apparatus except for the group management assistance apparatus or information input from an apparatus except for the group management assistance apparatus.

6. A group management method comprising:
the group information receiving step of receiving group information from a group management assistance apparatus;
the session change detecting step of determining whether a group which establishes a session and in which participating members must be changed by the group information is present; and
the session participating member changing step of, if a group which has been established a session and in which participating members must be changed by the group information is present, then changing members participating the group using the group information.

7. A computer program product embodied on a computer-readable medium and comprising codes that, when executed, cause a computer to perform a group management assistance method comprising:
the presence information receiving step of receiving presence information of a client in which presence information changes;
the change occurrence group detecting step of determining whether a group to be generated, a group in which constituent members are changed, or a group to be deleted is present by comparing a policy of each group with the presence information; and
the group information transmitting step of transmitting group information related to the group to be generated, the group in which the constituent members are changed, or the group to be deleted.

8. The computer program product according to claim 7, wherein
the policy includes information is in an apparatus except for the group management assistance apparatus or information input from an apparatus except for the group management assistance apparatus.

9. A computer program product embodied on a computer-readable medium and comprising codes that, when executed, cause a computer to perform a group management method comprising:
the group information receiving step of receiving group information from a group management assistance apparatus;
the session change detecting step of determining whether a group which establishes a session and in which participating members must be changed by the group information is present; and
the session participating member changing step of, if a group which has been established a session and in which participating members must be changed by the group information is present, then changing members participating the group using the group information.
